(19) Europäisches Patentamt
European Patent Office
Office européen des brevets

(11) **EP 3 730 906 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **20168669.8**

(22) Anmeldetag: **08.04.2020**

(51) Internationale Patentklassifikation (IPC):
**G01F 1/36** (2006.01)   **F24F 11/74** (2018.01)
**G01F 1/44** (2006.01)   **G01F 1/50** (2006.01)
**G05D 7/06** (2006.01)   **G01F 15/00** (2006.01)

(52) Gemeinsame Patentklassifikation (CPC):
**G01F 1/363; G01F 1/44; G01F 1/50; G01F 15/002; G01F 15/003; G01F 15/005; G05D 7/0635**

(54) **VOLUMENSTROMREGLER UND VERFAHREN ZUM REGELN EINES VOLUMENSTROMS**

VOLUME FLOW REGULATOR AND METHOD FOR CONTROLLING A VOLUME FLOW

RÉGULATEUR DE DÉBIT VOLUMIQUE ET PROCÉDÉ DE RÉGULATION D'UN DÉBIT VOLUMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2019   DE 102019205113**

(43) Veröffentlichungstag der Anmeldung:
**28.10.2020   Patentblatt 2020/44**

(73) Patentinhaber: **Bufe, Rainer**
**23730 Bliesdorf (DE)**

(72) Erfinder: **Bufe, Rainer**
**23730 Bliesdorf (DE)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
**WO-A1-99/15862      WO-A1-2008/025935**
**DE-A1- 19 545 948   DE-A1-102012 011 943**
**DE-B- 1 055 831     DE-B1- 1 648 059**
**US-A- 4 231 262**

EP 3 730 906 B1

**Beschreibung**

Die vorliegende Offenbarung betrifft einen Volumenstromregler und ein Verfahren zum Regeln eines Volumenstroms, insbesondere für die Verwendung in einem Be- oder Entlüftungssystem wie etwa einer klima- oder lüftungstechnischen Anlage.

Volumenstromregler dieser Art finden häufig Anwendung in Be- oder Entlüftungssystemen für Labore und/oder Produktionsstätten. Mit solchen Volumenstromreglern wird möglichst genau mittels einer Drosselklappe ein gewünschter Volumenstrom durch einen Strömungskanalabschnitt eingestellt. Hierbei kann sich die Öffnungsstellung der Drosselklappe durch einen Strömungsdruck gegen eine Federkraft selbsttätig einstellen oder angesteuert über einen Motor eingestellt werden. In der DE 195 45 948 C2 ist beispielsweise ein bekannter Volumenstromregler beschrieben. In DE 10 2012 011 943 A1 ist ein Volumenstromregler mit einer Venturidüseneinheit beschrieben.

Es ist allerdings eine Herausforderung, mit einem Volumenstromregler dieser Art den Volumenstrom sowohl im Bereich kleiner Volumenströme als auch im Bereich großer Volumenströme mit hoher Genauigkeit zu regeln. Außerdem sollte der Volumenstromregler einen möglichst großen Volumenstromregelbereich haben und möglichst energieeffizient und geräuscharm sein, d.h. einen möglichst geringen Druckverlust bewirken. Des Weiteren ist eine kompakte Bauweise, insbesondere in Hauptströmungsrichtung, erstrebenswert.

Mit dem hierin offenbarten Volumenstromregler sowie dem hierin offenbarten Verfahren zum Regeln eines Volumenstroms werden diese Vorteile erreicht.

Gemäß einem ersten Aspekt der vorliegenden Offenbarung wird ein Volumenstromregler bereitgestellt, insbesondere für die Verwendung in einem Be- oder Entlüftungssystem. Der Volumenstromregler weist dabei

- einen sich im Wesentlichen entlang einer Hauptströmungsrichtung erstreckenden Strömungskanalabschnitt,
- eine Drosselklappe, die um eine zur Hauptströmungsrichtung im Wesentlichen senkrecht verlaufende Schwenkachse schwenkbar innerhalb des Strömungskanalabschnitts angeordnet ist, und
- mindestens drei Druckmessstellen auf, wobei eine erste der mindestes drei Druckmessstellen stromaufwärts von einer zweiten der mindestes drei Druckmessstellen angeordnet ist und die zweite Druckmessstelle stromaufwärts von einer dritten der mindestes drei Druckmessstellen angeordnet ist.

Der Strömungskanalabschnitt weist dabei einen Verengungsabschnitt mit verringertem Strömungsquerschnitt und einem Aufweitungsabschnitt auf, wobei die zweite Druckmessstelle im Verengungsabschnitt angeordnet ist, und wobei die Schwenkachse der Drosselklappe in Hauptströmungsrichtung zwischen der zweiten Druckmessstelle und der dritten Druckmessstelle angeordnet ist, wobei ein stromaufwärtiger Teil der Drosselklappe in einem bestimmten Öffnungswinkelbereich mit einer Außenkante zumindest teilweise dichtend mit einer Innenwandung des Aufweitungsabschnitts abschließt.

Mit den drei Druckmessstellen, von denen die in Hauptströmungsrichtung gesehen mittlere Druckmessstelle in einem verjüngten Strömungsquerschnitt liegt und die in Hauptströmungsrichtung gesehen hintere Druckmessstelle hinter der Drosselklappe liegt, können unterschiedliche Druckdifferenzen erfasst werden und je nach Volumenstromregelbereich zur Regelung der Volumenströme herangezogen werden. Damit wird eine hohe Genauigkeit in einem möglichst großen Volumenstromregelbereich erreicht. Der Verengungsabschnitt wirkt hier wie eine Venturi-Düse, sodass sich mit der Druckdifferenz zwischen den ersten beiden Druckmessstellen hohe Volumenströme genauer einstellen lassen als mit der Druckdifferenz zwischen der ersten und der dritten Druckmessstelle. Niedrige Volumenströme hingegen lassen sich genauer einstellen auf Basis der Druckdifferenz zwischen der ersten und der dritten Druckmessstelle. Der Einfluss der unterschiedlichen Druckdifferenz auf die Volumenstromeinstellung kann mit dem aktuellen Öffnungswinkel der Drosselklappe variierend gewichtet werden.

Optional kann die erste Druckmessstelle stromaufwärts vom Verengungsabschnitt angeordnet sein. Der Strömungsquerschnitt an der ersten Druckmessstelle ist damit größer als an der zweiten Druckmessstelle, sodass sich bei den sich dadurch ergebenden unterschiedlichen Strömungsgeschwindigkeiten zwischen der ersten und zweiten Druckmessstelle eine mit der Strömungsgeschwindigkeit skalierende Druckdifferenz ergibt. Der Volumenstrom Q hängt mit der Druckdifferenz ∆P wie folgt zusammen: $Q = C \cdot \sqrt{\Delta P}$ , wobei C ein Drossel- bzw. Blendenfaktor ist, der von der Geometrie des Volumenstromreglers und dem Öffnungswinkel der Drosselklappe abhängt. Der Drossel- bzw. Blendenfaktor C hat ein Minimum bei maximal geöffneter Drosselklappe, wobei dieses Minimum hauptsächlich durch die fest vorgegebene Verjüngung des Strömungsquerschnitts im Verengungsabschnitt bestimmt ist. Der Drossel- bzw. Blendenfaktor C hat ein Maximum bzw. strebt gegen unendlich bei sehr wenig geöffneter bzw. geschlossener Drosselklappe, wobei der durch die Verjüngung des Strömungsquerschnitts im Verengungsabschnitt bestimmte Anteil am Drossel- bzw. Blendenfaktor C bei sehr kleinen Öffnungswinkeln der Drosselklappe vernachlässigt werden kann.

Optional kann die dritte Druckmessstelle stromabwärts vom Verengungsabschnitt angeordnet sein. Vorzugsweise ist der Strömungsquerschnitt an der ersten Druckmessstelle und an der dritten Druckmessstelle gleich, sodass die Druckdifferenz zwischen der ersten Druckmessstelle und der dritten Druckmessstelle den gesamten Druckverlust über den Volumenstromregler wiedergibt.

Optional kann eine oder mehrere der drei Druckmessstellen jeweils als eine den Strömungskanalabschnitt umgreifende Ringkammer ausgebildet sein, wobei mindestens ein radialer Durchströmungsweg aus dem Strömungskanalabschnitt in die Ringkammer vorhanden ist. Dadurch ist der durch die Druckmessung induzierte Druckverlust sehr gering. Außerdem bewirkt ein Saugeffekt, dass die Durchströmungswege zeitweise radial von der Ringkammer nach innen in den Strömungskanalabschnitt durchströmt werden, was die Verschmutzung der Druckmessstellen reduziert.

Optional kann eine Mehrzahl von radialen Durchströmungswegen aus dem Strömungskanalabschnitt in die Ringkammer umfangseitig am Strömungskanalabschnitt verteilt sein. Damit wird an der jeweiligen Druckmessstelle ein über den Strömungsquerschnitt gemittelter Druck erfasst und es werden umfangseitig lokale Druckunterschiede ausgeglichen.

Optional kann der Volumenstromregler einen ersten Drucksensor aufweisen zur Erfassung einer ersten Druckdifferenz zwischen der ersten Druckmessstelle und der zweiten Druckmessstelle, und einem zweiten Drucksensor aufweisen zur Erfassung einer zweiten Druckdifferenz zwischen der ersten Druckmessstelle und der dritten Druckmessstelle. Wie bereits oben beschrieben, kann mit diesen beiden Druckdifferenzen eine genaue Volumenstromeinstellung über einen großen Regelbereich eingestellt werden. Die Drucksensoren können extern vom Volumenstromregler angeordnet sein, sind aber vorzugsweise als Teil des Volumenstromreglers in diesen integriert.

Optional kann der Volumenstromregler ein Ventil oder einen dritten Drucksensor zur Erfassung des Drucks an der dritten Druckmessstelle gegenüber dem Umgebungsdruck aufweisen. Mit diesem Druck kann ein Volumenstromerzeuger, wie etwa ein Abluft oder Zuluftventilator, im Be- oder Entlüftungssystem derart angesteuert werden, dass der vom Volumenstromerzeuger erzeugte Volumenstrom reduziert wird, wenn abhängig vom erfassten Druck an der dritten Druckmessstelle die Drosselklappe weiter geöffnet werden kann. Da der somit erfasste Druck einen Vordruck" wiedergibt, den der Volumenstromerzeuger nicht erzeugen muss, kann die Leistung des Volumenstromerzeugers energiesparend reduziert werden. Es sei an dieser Stelle angemerkt, dass der Begriff "Druck" sowohl positive Drücke als auch negative Drücke, also Unterdrücke, umfassen kann. Bei einer Absauganlage in Betrieb ist beispielsweise der Druck an der dritten Druckmessstelle geringer als der Umgebungsdruck, um Luft in Hauptströmungsrichtung durch den Strömungskanalabschnitt zu saugen. Wenn sich durch die Leistungsreduzierung des Volumenstromerzeugers, beispielsweise eines Saugmotors, der Unterdruck an der dritten Druckmessstelle reduziert, d.h. die Differenz zwischen dem Druck an der dritten Druckmessstelle und dem Umgebungsdruck reduziert, kann die Drosselklappe weiter geöffnet werden, um einen höheren Volumenstrom zuzulassen. Da dann der Volumenstrom mit geringerer Leistung des Volumenstromerzeugers erreicht wird, arbeitet der Volumenstromregler nun energieeffizienter. Auch die potentielle Geräuschentwicklung ist bei höheren Öffnungswinkeln der Drosselklappe geringer.

Optional kann die Schwenkachse der Drosselklappe im Verengungsabschnitt oder auf Höhe des stromabwärtigen Endes des Verengungsabschnitts oder stromabwärts vom Verengungsabschnitt angeordnet sein. Es gibt also prinzipiell drei Möglichkeiten, auf welcher Höhe in Hauptströmungsrichtung die Drosselklappe angeordnet ist. Bei der ersten Möglichkeit kann sich der Verengungsabschnitt stromabwärts der Drosselklappe auf die dritte Druckmessstelle zu aufweiten. Dies kann von Vorteil sein, wenn die Drosselklappe kleiner ausgestaltet werden soll. Wenn die Größe der Drosselklappe die minimale Länge des Volumenstromreglers in Hauptströmungsrichtung vorgibt, so kann eine kleinere Drosselklappe eine in Hauptströmungsrichtung kompaktere Bauweise des Volumenstromreglers erlauben. Dies ist insbesondere bei geringen Deckenhöhen von Vorteil. Bei der zweiten Möglichkeit endet der Verengungsabschnitt stromabwärtig auf Höhe der Schwenkachse der Drosselklappe. Dies kann strömungs- und fertigungstechnisch besonders günstig sein, denn der Strömungsquerschnitt muss sich stromabwärts der Drosselklappe zur dritten Druckmessstelle hin nicht mehr aufweiten. Bei der dritten Möglichkeit kann die Drosselklappe mit mehr Abstand von der zweiten Druckmessstelle weniger die Erfassung der ersten Druckdifferenz beeinflussen, was prinzipiell für eine genauere Regelung förderlich ist. Da dies allerdings mit einer weniger kompakten Bauweise des Volumenstromreglers in Hauptströmungsrichtung einhergeht, ist die dritte Möglichkeit weniger bevorzugt.

Optional kann der Verengungsabschnitt einen Verjüngungsabschnitt mit zumindest teilweise im Längsschnitt konvex geformter Innenwandung und einen stromabwärts vom Verjüngungsabschnitt angeordneten Aufweitungsabschnitt mit zumindest teilweise im Längsschnitt konkav geformter Innenwandung aufweisen. Dies ist strömungstechnisch von Vorteil, da der durch den Verengungsabschnitt bedingte Druckverlust dadurch verringert wird. Auch eine kompaktere Bauweise des Volumenstromreglers in Hauptströmungsrichtung ist dadurch möglich, da die geöffnete Drosselklappe in den konvex geformten Aufweitungsabschnitt ragen kann.

Optional kann die Innenwandung des Aufweitungsabschnitts im Längsschnitt entlang eines Kreisbogens verlaufen, dessen Mittelpunkt im Wesentlichen auf der Schwenkachse liegt. Damit kann die Drosselklappe mit einer Außenkante ihres stromaufwärts gerichteten Teils an der Innenwandung des Aufweitungsabschnitts in einem bestimmten Öffnungswinkelbereich entlangfahren und vorzugsweise dichtend damit abschließen. Die Drosselklappe öffnet dann in diesem Öffnungswinkelbereich nur mit ihrem stromabwärts gerichteten Teil. Dies kann zum einen von Vorteil sein, weil die Drosselklappe dann den Volumenstrom energieeffizienter und geräuschärmer drosselt und zum anderen insbesondere bei geringen einzustellenden Volumenströmen, also kleinen Öffnungswinkeln eine exaktere Regelung erlaubt.

Optional kann dabei die Bogenlänge des Kreisbogens 1/18 bis 1/6 eines Kreisumfangs betragen, vorzugsweise für einen Öffnungswinkelbereich der Drosselklappe von 0° bis 20° bzw. 60°. Optional kann dabei das stromabwärtige Ende des Kreisbogens tangential im Wesentlichen in Hauptströmungsrichtung verlaufen. Die Schwenkachse der Drosselklappe liegt dann vorzugsweise auf Höhe des stromabwärtigen Endes des Kreisbogens.

Optional kann ein Teil einer radialen Außenkante der Drosselklappe in einem Schwenkbereich entlang des Kreisbogens an der Innenwandung des Aufweitungsabschnitts verlaufen und vorzugsweise dichtend daran anliegen. Dieser Teil der radialen Außenkante der Drosselklappe ist vorzugsweise ein in stromaufwärtige Richtung schwenkbarer Teil. Der in stromabwärtige Richtung schwenkbare Teil der Drosselklappe bestimmt in dem Schwenkbereich die Öffnungsgröße für den Volumenstrom. Außerhalb dieses Schwenkbereichs kann die Drosselklappe auch an dem in stromaufwärtige Richtung schwenkbaren Teil einen Volumenstrom durchlassen. Erfindungsgemäß schließt der stromaufwärtige Teil der Drosselklappe in einem bestimmten Öffnungswinkelbereich, vorzugsweise 0° bis mindestens 15°, mit der Außenkante zumindest teilweise dichtend mit der Innenwandung des Aufweitungsabschnitts ab. Dadurch wird insbesondere für geringere Volumenströme eine genauere Regelung möglich.

Optional kann der Strömungskanalabschnitt an der ersten Druckmessstelle im Wesentlichen den gleichen Strömungsquerschnitt wie an der dritten Druckmessstelle haben und an der zweiten Druckmessstelle einen demgegenüber verringerten Strömungsquerschnitt aufweisen. Damit ist der Volumenstromregler einfach als Strömungskanalabschnitt in einen Lüftungskanal eines Be- oder Entlüftungssystems nachrüstbar.

Optional kann der Volumenstromregler eine Steuerungseinrichtung aufweisen zur Steuerung eines Motors für die Einstellung eines Öffnungswinkels der Drosselklappe basierend auf einer Erfassung einer ersten Druckdifferenz zwischen der ersten Druckmessstelle und der zweiten Druckmessstelle, sowie einer Erfassung einer zweiten Druckdifferenz zwischen der ersten Druckmessstelle und der dritten Druckmessstelle. Die Steuerungseinrichtung ist also in den Volumenstromregler integriert, vorzugsweise in Kombination mit den Drucksensoren. Alternativ dazu kann die Steuerungseinrichtung extern vom Volumenstromregler angeordnet sein und in drahtloser oder verkabelter Kommunikation mit dem Motor für die Einstellung des Öffnungswinkels der Drosselklappe sowie mit den Drucksensoren zur Druckerfassung stehen.

Gemäß einem zweiten Aspekt der vorliegenden Offenbarung wird Verfahren zum Regeln eines Volumenstroms durch einen Strömungskanalabschnitt in einem Be- oder Entlüftungssystem bereitgestellt, wobei das Verfahren die folgenden Schritte aufweist:

- Erfassen einer ersten Druckdifferenz zwischen einer ersten Druckmessstelle am Strömungskanalabschnitt und einer zweiten Druckmessstelle am Strömungskanalabschnitt, wobei die erste Druckmessstelle stromaufwärts von der zweiten Druckmessstelle angeordnet ist, wobei der Strömungsquerschnitt des Strömungskanalabschnitts an der zweiten Druckmessstelle gegenüber der ersten Druckmessstelle kleiner ist und sich in einem Aufweitungsabschnitt aufweitet,
- Erfassen einer zweiten Druckdifferenz zwischen der ersten Druckmessstelle und einer dritten Druckmessstelle am Strömungskanalabschnitt, wobei die dritte Druckmessstelle stromabwärts von der zweiten Druckmessstellen angeordnet ist, wobei eine Drosselklappe in Hauptströmungsrichtung zwischen der zweiten und der dritten Druckmessstelle angeordnet ist, und
- Einstellen eines Öffnungswinkels der Drosselklappe basierend auf der Erfassung der ersten Druckdifferenz und der zweiten Druckdifferenz, wobei ein stromaufwärtiger Teil der Drosselklappe in einem bestimmten Öffnungswinkelbereich mit einer Außenkante zumindest teilweise dichtend mit einer Innenwandung des Aufweitungsabschnitts abschließt.

Bei dem Verfahren werden also beide Druckdifferenzen dazu genutzt, den Volumenstrom möglichst genau zu regeln, wobei der Einfluss der jeweiligen Druckdifferenz je nach Öffnungswinkel unterschiedlich gewichtet sein kann. Bei großen Öffnungswinkeln, also hohen Volumenströmen, kann die erste Druckdifferenz stärker gewichtet werden als die zweite Druckdifferenz. Umgekehrt bei kleinen Öffnungswinkeln, also niedrigen Volumenströmen, kann die zweite Druckdifferenz stärker gewichtet werden als die erste Druckdifferenz.

Optional kann also für das Einstellen geringer Öffnungswinkel die zweite Druckdifferenz stärker gewichtet werden als die erste Druckdifferenz, und umgekehrt für das Einstellen höherer Öffnungswinkel die erste Druckdifferenz stärker gewichtet werden als die zweite Druckdifferenz.

Dabei kann für das Einstellen ein Gewichtungsfaktor angewandt werden, der von dem aktuellen Öffnungswinkel abhängt und bestimmt, in welchem Maße die erste Druckdifferenz und/oder die zweite Druckdifferenz das Einstellen bestimmt.

Optional kann das Verfahren ferner die folgenden Schritte aufweisen:

- Erfassen des Drucks an der dritten Druckmessstelle gegenüber dem Umgebungsdruck,

- Ansteuern eines Volumenstromerzeugers im Be- oder Entlüftungssystem, sodass der vom Volumenstromerzeuger erzeugte Volumenstrom reduziert wird, wenn abhängig vom erfassten Druck an der dritten Druckmessstelle die Drosselklappe weiter geöffnet werden kann.

Wie zuvor beschrieben, kann dadurch die Drosselklappe bei höheren Öffnungswinkeln energieeffizienter und geräuschärmer betrieben werden.

Optional kann die Drosselklappe erst dann geöffnet werden, wenn die zweite Druckdifferenz einen Mindestwert überschreitet. Damit kann vermieden werden, dass die Regelung bei zu geringen Volumenströmen mangels hinreichend erfassbarer Druckdifferenzen unmöglich wird.

Die Offenbarung ist nachfolgend anhand von in den Zeichnungen dargestellten Ausführungsbeispielen näher erläutert. Es zeigen:

Fig. 1 einen Längsschnitt eines ersten Ausführungsbeispiels des hierein offenbarten Volumenstromreglers;

Fig. 2 eine Draufsicht in Hauptströmungsrichtung auf den Volumenstromregler aus Fig. 1;

Fig. 3 einen Längsschnitt eines zweiten Ausführungsbeispiels des hierein offenbarten Volumenstromreglers;

Fig. 4 eine Draufsicht in Hauptströmungsrichtung auf den Volumenstromregler aus Fig. 3;

Fig. 5 einen Längsschnitt des Volumenstromreglers aus Fig. 1 und 2 mit Drucksensoren;

Fig. 6 einen Längsschnitt des Volumenstromreglers aus Fig. 3 und 4 mit Drucksensoren;

Fig. 7 einen Längsschnitt des Volumenstromreglers aus Fig. 1 und 2 mit Drucksensoren und Steuerungseinrichtung; und

Fig. 8 einen Längsschnitt des Volumenstromreglers aus Fig. 3 und 4 mit Drucksensoren und Steuerungseinrichtung.

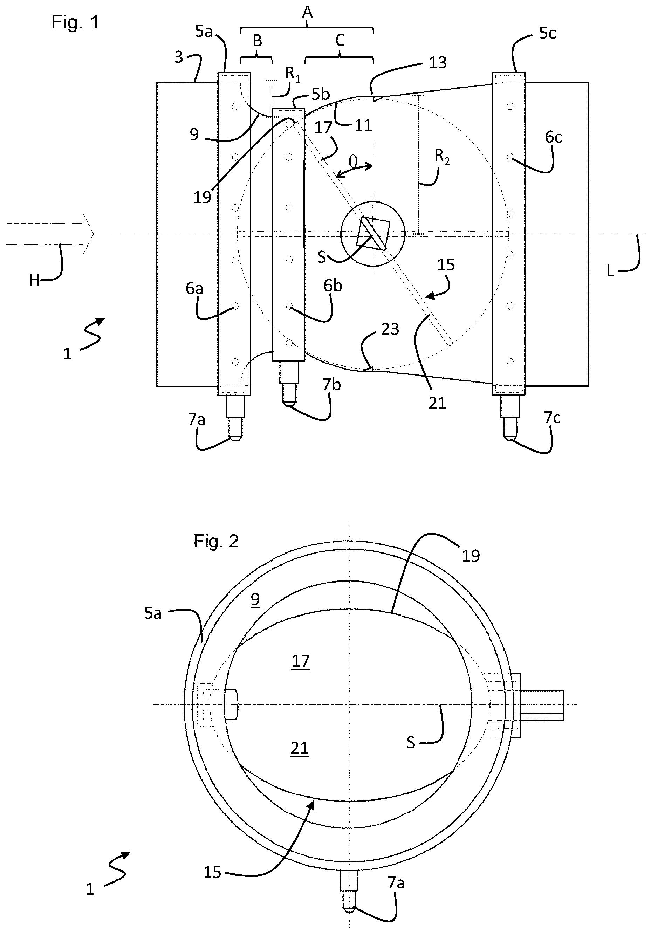

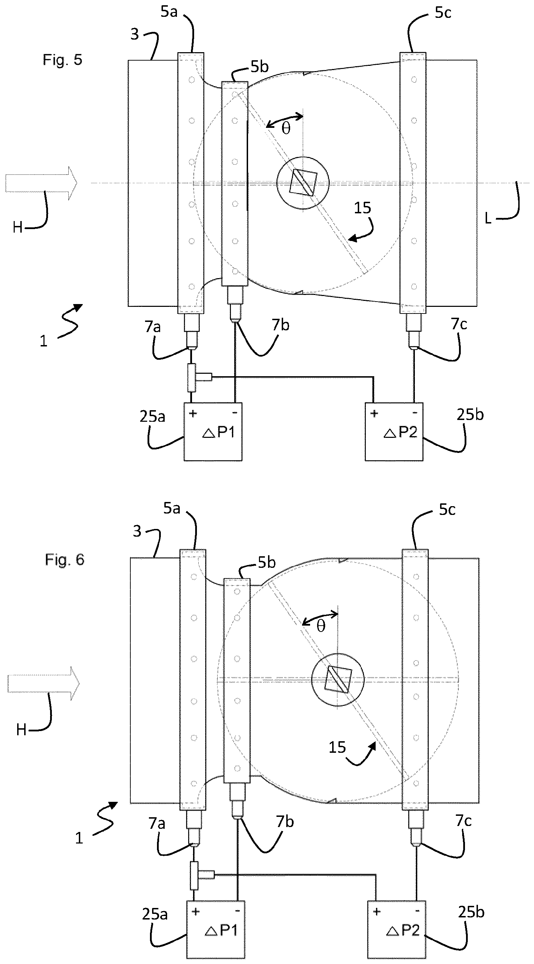

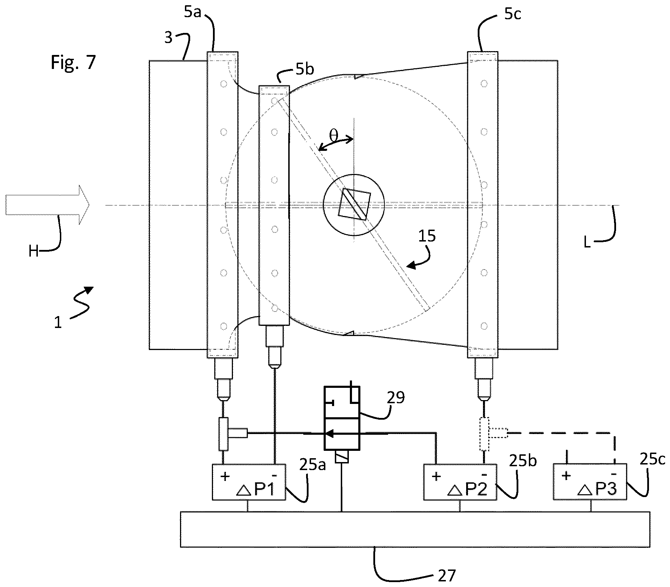

In Fig. 1 ist ein Volumenstromregler 1 mit einem Strömungskanalabschnitt 3 gezeigt, der sich mit seiner Längsachse L entlang einer Hauptströmungsrichtung H (hiervon links nach rechts) erstreckt. Der Volumenstromregler 1 weist zudem drei Druckmessstellen 5a-c auf, wobei die erste Druckmessstelle 5a stromaufwärts der zweiten Druckmessstelle 5b liegt, und die zweite Druckmessstelle 5b stromaufwärts der dritten Druckmessstelle 5c. Die Druckmessstellen 5a-c sind jeweils als eine den Strömungskanalabschnitt 3 umgreifende Ringkammer ausgebildet, wobei eine Mehrzahl von radialen Durchströmungswegen 6a-c aus dem Strömungskanalabschnitt 3 in die Ringkammer umfangseitig verteilt sind. Die Druckmessstellen 5a-c weisen jeweils einen Anschluss 7a-c zur Druckerfassung mittels Drucksensoren (siehe Figuren 5 und 7) auf. Damit wird an der jeweiligen Druckmessstelle 5a-c ein über den Strömungsquerschnitt gemittelter Druck erfasst und es werden umfangseitig lokale Druckunterschiede ausgeglichen.

Die Ringkammer der zweiten Druckmessstelle 5b hat einen kleineren Durchmesser als die Ringkammern der ersten und dritten Druckmessstelle 5a,c, wohingegen der Durchmesser der Ringkammern der ersten und dritten Druckmessstelle 5a,c gleich ist. Die zweite Druckmessstelle 5b befindet sich in einem Verengungsabschnitt A, wobei sich der Strömungsquerschnitt des Strömungskanalabschnitt 3 in einem stromaufwärtigen Verjüngungsabschnitt B des Verengungsabschnitts A zwischen der ersten Druckmessstelle 5a und der zweiten Druckmessstelle 5b verjüngt. Die Innenwandung 9 des Verjüngungsabschnitts B ist hierbei im Längsschnitt konvex nach innen gewölbt und folgt im Wesentlichen einem Kreisbogen mit einem Radius $R_1$. Eine andere konvexe aerodynamisch günstige Form der Wölbung ist hier alternativ möglich, z. B. elliptisch, einer Wurzelfunktion oder einer anderen Funktion folgend. Stromabwärts der zweiten Druckmessstelle 5b weitet sich der Strömungsquerschnitt des Strömungskanalabschnitt 3 im Verengungsabschnitt A in einem Aufweitungsabschnitt C wieder auf. Dort ist die Innenwandung 11 des Aufweitungsabschnitt C im Längsschnitt konkav nach außen gewölbt und folgt im Wesentlichen über ca. 30° einem Kreisbogen mit einem Radius $R_2$. Der Radius $R_2$ ist hier signifikant größer als der Radius $R_1$. Das stromabwärtige Ende 13 der kreisbogenförmigen Innenwandung 11 des Aufweitungsabschnitt C verläuft tangential im Wesentlichen in Hauptströmungsrichtung H. Stromabwärts vom Aufweitungsabschnitt C weitet sich der Strömungsquerschnitt des Strömungskanalabschnitts 3 geradlinig weiter auf bis zur dritten Druckmessstelle 5c.

Zwischen der zweiten Druckmessstelle 5b und der dritten Druckmessstelle 5c ist eine Drosselklappe 15 um eine zur Hauptströmungsrichtung H im Wesentlichen senkrecht verlaufende Schwenkachse S schwenkbar innerhalb des Strömungskanalabschnitts 3 angeordnet. Die Schwenkachse S liegt in Hauptströmungsrichtung H in etwa auf Höhe des stromabwärtiges Endes 13 der kreisbogenförmigen Innenwandung 11 des Aufweitungsabschnitts C. Die Drosselklappe 15 kann im Wesentlichen zwischen einer Schließstellung, also einem Öffnungswinkel von ca. 0° bei Ausrichtung der Drosselklappe 15 quer zur Hauptströmungsrichtung H, und einer maximalen Öffnungsstellung, also einem Öffnungswinkelvon ca. 90° bei Ausrichtung der Drosselklappe 15 in Hauptströmungsrichtung H, eingestellt werden. Die Drosselklappe 15 stellt also einen variablen Staukörper für den Volumenstrom durch den Strömungskanalabschnitt 3 dar. Mit der Einstellung des Öffnungswinkels der Drosselklappe 15 kann ein gewünschter Volumenstrom durch den Strömungskanalabschnitt 3 eingestellt und mittels Erfassung von Druckdifferenzen über die Druckmessstellen 5a-c als Feedbackwerte geregelt werden.

Die Drosselklappe 15 hat hier einen Radius, der im Wesentlichen dem Radius $R_2$ der kreisbogenförmigen Innenwandung 11 des Aufweitungsabschnitts C, sodass die Drosselklappe 15 in dem stromaufwärtigen Teil 17 bis zu einem Öffnungswinkel von ca. 30° mit einer Außenkante 19 dichtend mit der Innenwandung 11 abschließt. Die Drosselklappe 15 kann dazu eine Dichtlippe auf der Außenkante 19 des stromaufwärtigen Teils 17 der Drosselklappe 15 aufweisen, die bei Öffnungswinkeln bis zu 30° an der Innenwandung 11 anliegt. Das bedeutet, dass bei kleinen Öffnungswinkeln bis zu 30° nur der stromabwärtige Teil 21 der Drosselklappe 15 eine Öffnung für den Volumenstrom schafft. Erst bei größeren Öffnungswinkeln über 30° verlässt die Außenkante 19 des stromaufwärtigen Teils 17 der Drosselklappe 15 die konkave Innenwandung 11 und lässt einen Volumenstrom durch. Das stromabwärtige Ende 13 der kreisbogenförmigen Innenwandung 11 des Aufweitungsabschnitts C weist hier Anschläge 23 auf, gegen die die Drosselklappe 15 in Schließstellung bzw. bei einem Öffnungswinkel von 0°, anschlagen kann. Die Anschläge 23 können als halbringförmige Stege an der Innenwandung des Strömungskanalabschnitts 3 ausgebildet sein, um mit der Drosselklappe 15 in der Schließstellung dichtend abzuschließen. Alternativ dazu kann die Drosselklappe 15 ohne Anschläge auch in die andere Richtung schwenkbar sein.

Fig. 2 zeigt in einer Draufsicht in Hauptströmungsrichtung H die Stellung der Drosselklappe 15 für einen Öffnungswinkel von etwa 45°, bei dem sowohl der stromaufwärtige Teil 17 der Drosselklappe 15 als auch der stromabwärtige Teil 21 der Drosselklappe 15 eine Volumenstromöffnung schafft. Aus Fig. 2 wird zudem deutlich, dass der Verjüngungsabschnitt B des Verengungsabschnitts A einen fest durch die Geometrie des Volumenstromreglers 1 vorgegebenen Staukörper darstellt. Die Drosselklappe 15 stellt dagegen einen variabel einstellbaren Staukörper dar.

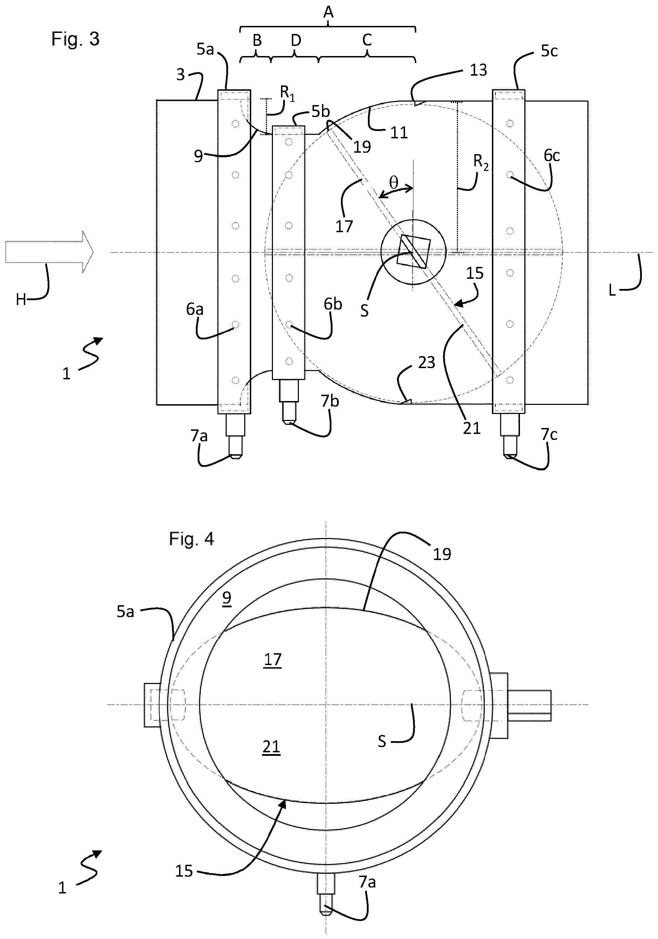

Das Ausführungsbeispiel gemäß Fig. 3 unterscheidet sich von dem in Figur 1 und 2 gezeigten Ausführungsbeispiel dadurch, dass der Durchmesser der Drosselklappe 15 größer ist und sich der Strömungsquerschnitt des Strömungskanalabschnitts 3 stromabwärts vom Aufweitungsabschnitt C nicht weiter bis zur dritten Druckmessstelle 5c aufweitet. Der Durchmesser der Drosselklappe 15 entspricht im Wesentlichen dem Durchmesser des Strömungskanalabschnitts 3 an der ersten und dritten Druckmessstelle 5a und 5c. Der Radius $R_2$ der konkaven kreisbogenförmigen Innenwandung 11 des Aufweitungsabschnitts C ist entsprechend gleich dem Radius des Strömungskanalabschnitts 3 an der ersten und dritten Druckmessstelle 5a und 5c. In dreidimensionaler Ansicht ist die konkave Innenwandung 11 des Aufweitungsabschnitts C also kugelflächenförmig. Zwischen dem Verjüngungsabschnitt B des Verengungsabschnitts A und dem Aufweitungsabschnitt C bleibt hier der Strömungsquerschnitt des Strömungskanalabschnitts 3 über einen Zwischenabschnitt D des Verengungsabschnitts A konstant. Die zweite Druckmessstelle 5b ist hier an einem stromaufwärtigen Ende dieses Zwischenabschnitts D angeordnet. Der Abstand in Hauptströmungsrichtung H zwischen der ersten Druckmessstelle 5a und der dritten Druckmessstelle 5b ist im Wesentlichen gleich wie beim Ausführungsbeispiel gemäß Fig. 1 und 2, kann aber ggf. länger gewählt werden, wenn beispielsweise die Drosselklappe 15 mit ihrem stromabwärtigen Teil 21 bei größeren Öffnungswinkeln nicht oder weniger stark über die dritte Druckmessstelle 5c ragen soll.

Fig. 4 zeigt in einer Draufsicht in Hauptströmungsrichtung H die Stellung der Drosselklappe 15 für einen Öffnungswinkel von etwa 45°, bei dem sowohl der stromaufwärtige Teil 17 der Drosselklappe 15 als auch der stromabwärtige Teil 21 der Drosselklappe 15 eine Volumenstromöffnung schafft. Aus Fig. 4 wird wie aus Fig. 2 zudem deutlich, dass der Verjüngungsabschnitt B des Verengungsabschnitts A einen fest durch die Geometrie des Volumenstromreglers 1 vorgegebenen Staukörper darstellt. Da die Form des Aufweitungsabschnitts C für die Stauwirkung kaum Einfluss hat, ist die Wirkung des festen Staukörpers im Ausführungsbeispiel gemäß Fig. 3 und 4 in etwa gleich wie im Ausführungsbeispiel gemäß Fig. 1 und 2. Die Stauwirkung des im Vergleich zum Ausführungsbeispiel gemäß Fig. 1 und 2 größeren Drosselklappe 15 im Ausführungsbeispiel gemäß Fig. 3 und 4 ist zudem sehr ähnlich wie im Ausführungsbeispiel gemäß Fig. 1 und 2. Der Drossel- bzw. Blendenfaktor C unterscheidet sich also nur wenig zwischen den Ausführungsbeispielen.

Figuren 5 und 6 zeigen jeweils für die zwei Ausführungsbeispiele schematisch die Erfassung der zwei Druckdifferenzen ΔP1 und ΔP2 mittels eines ersten Drucksensors 25a und eines zweiten Drucksensors 25b. Die erste Druckdifferenz ΔP1 wird zwischen der ersten Drosselstelle 5a und der zweiten Drosselstelle 5b erfasst. Diese erste Druckdifferenz ΔP1 ist besonders bei hohen Volumenströmen und weit geöffneter Drosselklappe 15 relevant. Da der Verengungsabschnitt A als Venturi-Düse wirkt, also im Verengungsabschnitt A eine höhere Strömungsgeschwindigkeit und ein entsprechend niedrigerer Druck herrscht, kann über den Zusammenhang $Q = C \cdot \sqrt{\Delta P1}$ , wobei C ein Drossel- bzw. Blendenfaktor ist, mittels der ersten Druckdifferenz ΔP1 ein Volumenstrom Q ermittelt und eingestellt werden. Die zweite Druckdifferenz ΔP2, die zwischen der ersten Drosselstelle 5a und der dritten Drosselstelle 5c erfasst wird, ist bei hohen Volumenströmen und weit geöffneter Drosselklappe 15 vernachlässigbar klein. Bei kleineren Volumenströmen und kleinen Öffnungswinkein der Drosselklappe 15 ist dies allerdings anders. Die zweite Druckdifferenz ΔP2 ist dann größer und relevanter für die Volumenstromeinstellung als die erste Druckdifferenz ΔP1. Die erste Druckdifferenz ΔP1 kann dann vernachlässigbar klein sein. Vorzugsweise können die beiden Druckdifferenzen mit einem öffnungswinkelabhängigen Gewichtungsfaktor $0 \leq w(\theta) \leq 1$ gewichtet in die Volumenstrombestimmung einbezogen werden, z. B. wie folgt:

$$Q = w(\theta) \cdot C(\theta) \cdot \sqrt{\Delta P1} + (1 - w(\theta)) \cdot C(\theta) \cdot \sqrt{\Delta P2},$$

wobei C(θ) als Drossel- bzw. Blendenfaktor ebenfalls vom Öffnungswinkel θ abhängt. Der Gewichtungsfaktor w(θ) kann dabei beispielsweise gemäß $w(\theta) = \frac{1}{90°}\theta$ linear für Öffnungswinkel θ im Bereich von 0 bis 90° ansteigen. Die Abhängigkeit des Drossel- bzw. Blendenfaktors C(θ) vom Öffnungswinkel θ, welche durch die Geometrie des Volumenstromreglers 1 bestimmt ist, kann als fester Zusammenhang in einer Steuerungseinrichtung 27 gespeichert oder von dieser abrufbar sein.

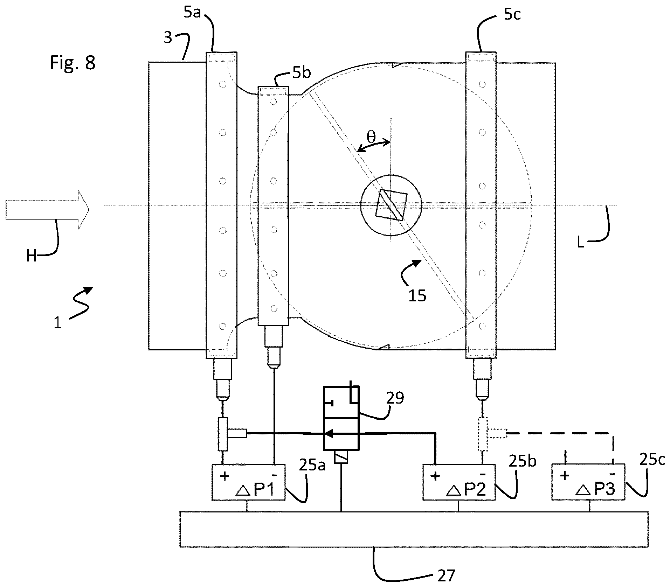

In Figuren 7 und 8 ist jeweils eine Steuerungseinrichtung 27 gezeigt, mit welcher der Volumenstrom durch den Strömungskanalabschnitt 3 mittels Einstellung des Öffnungswinkels der Drosselklappe 15 geregelt wird. Zusätzlich zu den Drucksensoren 25a und 25b ist ein durch die Steuerungseinrichtung 27 elektrisch steuerbares 2/2-Wegeventil 29 vorgesehen, welches so umgestellt werden kann, dass der zweite Drucksensor 25b entweder die Druckdifferenz ΔP2 zwischen der ersten Druckstelle 5a und der dritten Druckstelle 5c oder den Druck (ΔP2 = ΔP3 bei geschlossener Stellung des Ventils 29) an der dritten Druckstelle 5c gegenüber dem Umgebungsdruck erfasst. Alternativ zum 2/2-Wegeventil 29 kann ein dritter Drucksensor 25c vorgesehen sein, der den Druck ΔP3 an der dritten Druckstelle 5c gegenüber dem Umgebungsdruck erfasst. Mit dem erfassten Druck ΔP3 kann ein Volumenstromerzeuger, wie etwa ein Abluft- oder Zuluftventilator, im Be- oder Entlüftungssystem derart angesteuert werden, dass der vom Volumenstromerzeuger erzeugte Volumenstrom energiesparend reduziert wird, wenn abhängig vom erfassten Druck ΔP3 an der dritten Druckmessstelle 5c die Drosselklappe 15 weiter geöffnet werden kann.

Die Steuerungseinrichtung 27, die in den Volumenstromregler 1 integriert oder extern davon mit diesem drahtlos oder verkabelt signalverbunden sein kann, nimmt die Differenzdrücke ΔP1, ΔP2 und ΔP3 als Rückkopplungswert in die Volumenstromregelung auf und steuert einen Stellmotor für die Drosselklappe 15 so an, dass der Öffnungswinkel der Drosselklappe 15 so eingestellt wird, dass sich Differenzdrücke ΔP1, ΔP2 und ΔP3 ergeben, die einem gewünschten Volumenstrom entsprechen. Zudem kann die zweite Druckdifferenz ΔP2 dazu genutzt werden, bei geschlossener Drosselklappe 15 diese erst dann zu öffnen, wenn eine Mindestdruckdifferenz zwischen der ersten 5a und dritten Druckmessstelle 5c herrscht. Damit kann verhindert werden, dass die Volumenstromregelung wegen zu geringer Druckdifferenzen zusammenbricht. Bei zu geringen Druckdifferenzen kann die Drosselklappe 15 in Sinne eines Reset der Volumenstromregelung geschlossen werden.

Sämtliche oder einzelne Teile des Volumenstromreglers 1 können ganz oder teilweise aus Metall oder Kunststoff, wie etwa Polypropylen (PP), Polypropylensulfid (PPS), elektrisch leitfähigem und flammhemmendem Polypropylensulfid (PPS-el), Polyethylen (PE), Polyvinylchlorid (PVC) o.ä. gefertigt sein. Der Volumenstromregler 1 ist vorzugsweise für verschiedene genormte Strömungskanaldurchmesser, z. B. 250 mm, einsetzbar. Bei einem Strömungskanaldurchmesser von beispielsweise 250 mm können relativ geringe Volumenströme von 50-200 m$^3$/h sehr genau hauptsächlich über die zweite Druckdifferenz ΔP2 geregelt werden. Relativ hohe Volumenströme von über 200 m$^3$/h können sehr genau hauptsächlich über die erste Druckdifferenz ΔP1 geregelt werden.

Die nummerierten Bezeichnungen der Bauteile oder Bewegungsrichtungen als "erste", "zweite", "dritte" usw. sind hierin rein willkürlich zur Unterscheidung der Bauteile oder Bewegungsrichtungen untereinander gewählt und können beliebig anders gewählt werden. Es ist damit kein Bedeutungsrang verbunden.

Äquivalente Ausführungsformen der hierin beschriebenen Parameter, Bauteile oder Funktionen, die in Anbetracht dieser Beschreibung einer fachlich versierten Person als offensichtlich erscheinen, seien hierin so erfasst als wären sie explizit beschrieben. Entsprechend soll der Schutzbereich der Ansprüche solche äquivalente Ausführungsformen umfassen. Als optional, vorteilhaft, bevorzugt, erwünscht oder ähnlich bezeichnete "kann"-Merkmale sind als optional zu verstehen und nicht als schutzbereichsbeschränkend.

Die beschriebenen Ausführungsformen sind als illustrative Beispiele zu verstehen und stellen keine abschließende Liste von möglichen Ausführungsformen dar. Jedes Merkmal, das im Rahmen einer Ausführungsform offenbart wurde, kann allein oder in Kombination mit einem oder mehreren anderen Merkmalen verwendet werden, unabhängig davon, in welcher Ausführungsform die Merkmale jeweils beschrieben wurden. Während mindestens ein Ausführungsbeispiel hierin beschrieben und gezeigt ist, seien Abwandlungen und alternative Ausführungsformen, die einer fachmännisch versierten Person in Anbetracht dieser Beschreibung als offensichtlich erscheinen, vom Schutzbereich dieser Offenbarung mit erfasst. Im Übrigen soll hierin weder der Begriff "aufweisen" zusätzliche andere Merkmale oder Verfahrensschritte ausschließen noch soll "ein" oder "eine" eine Mehrzahl ausschließen.

Bezugszeichenliste:

| | |
|---|---|
| 1 | Volumenstromregler |
| 3 | Strömungskanalabschnitt |
| 5a-c | Druckmessstellen |
| 6a-c | Durchströmungswege |
| 7a-c | Anschlüsse |
| 9 | Innenwandung des Verjüngungsabschnitts |
| 11 | Innenwandung des Aufweitungsabschnitts |
| 13 | stromabwärtige Ende der Innenwandung des Aufweitungsabschnitts |
| 15 | Drosselklappe |
| 17 | stromaufwärtiger Teil der Drosselklappe |
| 19 | Außenkante des stromaufwärtigen Teils der Drosselklappe |
| 21 | stromabwärtiger Teil der Drosselklappe |
| 23 | Anschläge |
| 25a-c | Drucksensoren |
| 27 | Steuerungseinrichtung |
| 29 | Ventil |
| A | Verengungsabschnitt |
| B | Verjüngungsabschnitt |
| C | Aufweitungsabschnitt |
| D | Zwischenabschnitt |
| H | Hauptströmungsrichtung |
| L | Längsachse |
| S | Schwenkachse |
| $R_1$ | Radius der Innenwandung des Verjüngungsabschnitts |
| $R_2$ | Radius der Innenwandung des Aufweitungsabschnitts |
| $\theta$ | Öffnungswinkel der Drosselklappe |
| w | Gewichtungsfaktor |

**Patentansprüche**

1. Volumenstromregler (1), insbesondere für die Verwendung in einem Be- oder Entlüftungssystem, wobei der Volumenstromregler (1)

   - einen sich im Wesentlichen entlang einer Hauptströmungsrichtung (H) erstreckenden Strömungskanalabschnitt (3),
   - eine Drosselklappe (15), die um eine zur Hauptströmungsrichtung (H) im Wesentlichen senkrecht verlaufende Schwenkachse (S) schwenkbar innerhalb des Strömungskanalabschnitts (3) angeordnet ist, und
   - mindestens drei Druckmessstellen (5a-c) aufweist, wobei eine erste (5a) der mindestes drei Druckmessstellen (5a-c) stromaufwärts von einer zweiten (5b) der mindestes drei Druckmessstellen (5a-c) angeordnet ist und die zweite Druckmessstelle (5b) stromaufwärts von einer dritten (5c) der mindestes drei Druckmessstellen (5a-c) angeordnet ist,

   **dadurch gekennzeichnet, dass**
   der Strömungskanalabschnitt (3) einen Verengungsabschnitt (A) mit verringertem Strömungsquerschnitt und einem Aufweitungsabschnitt (C) aufweist, wobei die zweite Druckmessstelle (5b) im Verengungsabschnitt (A) angeordnet ist, und wobei die Schwenkachse (S) der Drosselklappe (15) in Hauptströmungsrichtung (H) zwischen der zweiten Druckmessstelle (5b) und der dritten Druckmessstelle (5c) angeordnet ist, wobei ein stromaufwärtiger Teil (17) der Drosselklappe (15) in einem bestimmten Öffnungswinkelbereich mit einer Außenkante (19) zumindest teilweise dichtend mit einer Innenwandung (11) des Aufweitungsabschnitts (C) abschließt.

2. Volumenstromregler (1) nach Anspruch 1, ferner mit einem ersten Drucksensor (25a) zur Erfassung einer ersten Druckdifferenz (Δp1) zwischen der ersten Druckmessstelle (5a) und der zweiten Druckmessstelle (5b), und mit einem zweiten Drucksensor (25b) zur Erfassung einer zweiten Druckdifferenz (Δp2) zwischen der ersten Druckmessstelle (5a) und der dritten Druckmessstelle (5c).

3. Volumenstromregler (1) nach Anspruch 2, ferner mit einem Ventil (29) oder einem dritten Drucksensor (25c) zur Erfassung des Drucks (Δp3) an der dritten Druckmessstelle (5c) gegenüber dem Umgebungsdruck.

4. Volumenstromregler (1) nach einem der vorhergehenden Ansprüche, wobei die Schwenkachse (S) der Drosselklappe (15) im Verengungsabschnitt (A) oder auf Höhe des stromabwärtigen Endes (13) des Verengungsabschnitts (A) oder stromabwärts vom Verengungsabschnitt (A) angeordnet ist.

5. Volumenstromregler (1) nach einem der vorhergehenden Ansprüche, wobei der Verengungsabschnitt (A) einen Verjüngungsabschnitt (B) mit zumindest teilweise im Längsschnitt konvex geformter Innenwandung (9) aufweist, und wobei der Aufweitungsabschnitt (C) stromabwärts vom Verjüngungsabschnitt (B) angeordnet ist und zumindest teilweise im Längsschnitt eine konkav geformte Innenwandung (11) aufweist.

6. Volumenstromregler (1) nach Anspruch 5, wobei die Innenwandung (11) des Aufweitungsabschnitts (C) im Längsschnitt entlang eines Kreisbogens verläuft, dessen Mittelpunkt im Wesentlichen auf der Schwenkachse (S) liegt.

7. Volumenstromregler (1) nach Anspruch 6, wobei die Bogenlänge des Kreisbogens 1/18 bis 1/6 eines Kreisumfangs beträgt.

8. Volumenstromregler (1) nach einem der Ansprüche 6 oder 7, wobei ein Teil einer radialen Außenkante (19) der Drosselklappe (15) in einem Schwenkbereich entlang des Kreisbogens an der Innenwandung (11) des Aufweitungsabschnitts (C) verläuft.

9. Volumenstromregler (1) nach einem der vorhergehenden Ansprüche, wobei sich der bestimmte Öffnungswinkelbereich von 0° bis mindestens 15° erstreckt.

10. Volumenstromregler (1) nach einem der vorhergehenden Ansprüche, ferner mit einer Steuerungseinrichtung (27) zur Steuerung eines Motors für die Einstellung eines Öffnungswinkels (θ) der Drosselklappe (15) basierend auf einer Erfassung einer ersten Druckdifferenz (Δp1) zwischen der ersten Druckmessstelle (5a) und der zweiten Druckmessstelle (5b), sowie einer Erfassung einer zweiten Druckdifferenz (Δp2) zwischen der ersten Druckmessstelle (5a) und der dritten Druckmessstelle (5c).

11. Verfahren zum Regeln eines Volumenstroms durch einen Strömungskanalabschnitt (3) in einem Be- oder Entlüftungssystem, wobei das Verfahren die folgenden Schritte aufweist:

- Erfassen einer ersten Druckdifferenz (Δp1) zwischen einer ersten Druckmessstelle (5a) am Strömungskanalabschnitt (3) und einer zweiten Druckmessstelle (5b) am Strömungskanalabschnitt (3), wobei die erste Druckmessstelle (5a) stromaufwärts von der zweiten Druckmessstelle (5b) angeordnet ist, wobei der Strömungsquerschnitt (3) des Strömungskanalabschnitts (3) an der zweiten Druckmessstelle (5b) gegenüber der ersten Druckmessstelle (5a) verringert ist und sich in einem Aufweitungsabschnitt (C) aufweitet,
- Erfassen einer zweiten Druckdifferenz (Δp2) zwischen der ersten Druckmessstelle (5a) und einer dritten Druckmessstelle (5c) am Strömungskanalabschnitt (3), wobei die dritte Druckmessstelle (5c) stromabwärts von der zweiten Druckmessstellen (5b) angeordnet ist, wobei eine Drosselklappe (15) in Hauptströmungsrichtung (H) zwischen der zweiten Druckmessstelle (5b) und der dritten Druckmessstelle (5c) angeordnet ist, und
- Einstellen eines Öffnungswinkels (θ) der Drosselklappe (15) basierend auf der Erfassung der ersten Druckdifferenz (Δp1) und der zweiten Druckdifferenz (Δp2), wobei ein stromaufwärtiger Teil (17) der Drosselklappe (15) in einem bestimmten Öffnungswinkelbereich mit einer Außenkante (19) zumindest teilweise dichtend mit einer Innenwandung (11) des Aufweitungsabschnitts (C) abschließt.

12. Verfahren nach Anspruch 11, wobei für das Einstellen geringer Öffnungswinkel (θ) die zweite Druckdifferenz (Δp2) stärker gewichtet wird als die erste Druckdifferenz (Δp1), und wobei für das Einstellen höherer Öffnungswinkel (θ) die erste Druckdifferenz (Δp1) stärker gewichtet wird als die zweite Druckdifferenz (Δp2).

13. Verfahren nach Anspruch 12 oder 13, wobei für das Einstellen ein Gewichtungsfaktor (w) angewandt wird, der von dem aktuellen Öffnungswinkel (θ) abhängt und bestimmt, in welchem Maße die erste Druckdifferenz (Δp1) und/oder die zweite Druckdifferenz (Δp2) das Einstellen bestimmt.

14. Verfahren nach einem der Ansprüche 11 bis 13, ferner mit den Schritten:

- Erfassen des Drucks (Δp3) an der dritten Druckmessstelle gegenüber dem Umgebungsdruck,
- Ansteuern eines Volumenstromerzeugers im Be- oder Entlüftungssystem, sodass der vom Volumenstromerzeuger erzeugte Volumenstrom reduziert wird, wenn abhängig vom erfassten Druck (Δp3) an der dritten Druckmessstelle (5c) die Drosselklappe (15) weiter geöffnet werden kann.

15. Verfahren nach einem der Ansprüche 11 bis 14, wobei die Drosselklappe (15) erst dann geöffnet wird, wenn die zweite Druckdifferenz (Δp2) einen Mindestwert überschreitet.

**Claims**

1. A volume flow controller (1), in particular for use in an aeration or deaeration system, wherein the volume flow controller (1) includes

- a flow channel section (3) extending substantially along a main flow direction (H),
- a throttle valve (15), which is pivotably arranged about a pivot axis (S) extending substantially vertically to the main flow direction (H) within the flow channel section (3), and
- at least three pressure measuring points (5a-c), wherein a first (5a) of the at least three pressure measuring points (5a-c) is arranged upstream of a second (5b) of the at least three pressure measuring points (5a-c), and the second pressure measuring point (5b) is arranged upstream of a third (5c) of the at least three pressure measuring points (5a-c),

**characterised in that**
the flow channel section (3) comprises a narrow section (A) with reduced flow cross section, the narrow section (A) having a widening section (C), wherein the second pressure measuring point (5b) is arranged in the narrow section (A), and wherein the pivot axis (S) of the throttle valve (15) is arranged in main flow direction (H) between the second pressure measuring point (5b) and the third pressure measuring point (5c), wherein an outer edge (19) of an upstream part (17) of the throttle valve (15), in a certain opening angle range, forms, at least partially, a seal with an inner wall (11) of the widening section (C).

2. The volume flow controller (1) according to claim 1, further with a first pressure sensor (25a) for recording a first pressure difference (ΔP1) between the first pressure measuring point (5a) and the second pressure measuring point (5b) and with a second pressure sensor (25b) for recording a second pressure difference (ΔP2) between the first pressure measuring point (5a) and the third pressure measuring point (5c).

3. The volume flow controller (1) according to claim 2, further with a valve (29) or a third pressure sensor (25c) for recording the pressure (ΔP3) at the third pressure measuring point (5c) in comparison to the ambient pressure.

4. The volume flow controller (1) according to one of the preceding claims, wherein the pivot axis (S) of the throttle valve (15) is arranged in the narrow section (A) or at the level of the downstream end (13) of the narrow section (A) or downstream of the narrow section (A).

5. The volume flow controller (1) according to one of the preceding claims, wherein the narrow section (A) comprises a tapering section (B) with at least partially convexly shaped inner wall (9) in longitudinal section and wherein the widening section (C) is arranged downstream of the tapering section (B) and comprises a concavely shaped inner wall (11), at least partially, in longitudinal section.

6. The volume flow controller (1) according to claim 5, wherein the inner wall (11) of the widening section (C) extends in longitudinal section along a circular arc, the centre point of which substantially lies on the pivot axis (S).

7. The volume flow controller (1) according to claim 6, wherein the arc length of the circular arc is 1/18 to 1/6 of a circumference.

8. The volume flow controller (1) according to one of claims 6 or 7, wherein a part of a radial outer edge (19) of the throttle valve (15), in a pivoting range, extends along the circular arc on the inner wall (11) of the widening section (C).

9. The volume flow controller (1) according to one of the preceding claims, wherein the certain opening angle range extends from 0° to at least 15°.

10. The volume flow controller (1) according to one of the preceding claims, further with a control device (27) for controlling a motor for setting an opening angle ($\theta$) of the throttle valve (15) based on a recording of a first pressure difference ($\Delta$P1) between the first pressure measuring point (5a) and the second pressure measuring point (5b) as well as based on a recording of a second pressure difference ($\Delta$P2) between the first pressure measuring point (5a) and the third pressure measuring point (5c).

11. A method for controlling a volume flow through a flow channel section (3) in an aeration or deaeration system, wherein the method comprises the following steps:

    - Recording a first pressure difference ($\Delta$P1) between a first pressure measuring point (5a) at the flow channel section (3) and a second pressure measuring point (5b) at the flow channel section (3), wherein the first pressure measuring point (5a) is arranged upstream of the second pressure measuring point (5b), wherein the flow cross-section (3) of the flow channel section (3) is reduced at the second pressure measuring point (5b) in comparison to the first pressure measuring point (5a) and widens in a widening section (C),
    - Recording a second pressure difference ($\Delta$P2) between the first pressure measuring point (5a) and a third pressure measuring point (5c) at the flow channel section (3), wherein the third pressure measuring point (5c) is arranged downstream of the second pressure measuring point (5b), wherein a throttle valve (15) is arranged in main flow direction (H) between the second pressure measuring point (5b) and the third pressure measuring point (5c), and
    - Setting an opening angle ($\theta$) of the throttle valve (15) based on the recording of the first pressure difference ($\Delta$P1) and the second pressure difference ($\Delta$P2), wherein an outer edge (19) of the upstream part (17) of the throttle valve (15), in a certain opening angle range, forms a seal at least partially with an inner wall (11) of the widening section (C).

12. The method according to claim 11, wherein, for setting small opening angles ($\theta$), the second pressure difference ($\Delta$P2) is weighted more heavily than the first pressure difference ($\Delta$P1), and wherein, for setting higher opening angles ($\theta$), the first pressure difference ($\Delta$P1) is weighted more heavily than the second pressure difference ($\Delta$P2).

13. The method according to claim 12 or 13, wherein a weighting factor (w) is applied for the setting operation, which depends on the current opening angle ($\theta$) and determines, to what extent the first pressure difference ($\Delta$P1) and/or the second pressure difference ($\Delta$P2) determines the setting operation.

14. The method according to one of claims 11 to 13, further with the steps:

    - Recording the pressure ($\Delta$P3) at the third pressure measuring point in comparison to the ambient pressure,
    - Controlling a volume flow generator in the aeration or deaeration system, so that the volume flow generated by the volume flow generator is reduced, when depending on the recorded pressure ($\Delta$P3) at the third pressure measuring point (5c) the throttle valve (15) can be opened wider.

15. The method according to one of claims 11 to 14, wherein the throttle valve (15) is not opened until the second pressure difference ($\Delta$P2) exceeds a minimum value.

**Revendications**

1. Régulateur de débit volumique (1), notamment pour une utilisation dans un système d'aération et d'extraction d'air, le régulateur de débit volumique (1) comprenant

    - un tronçon de canal d'écoulement (3) s'étendant dans une direction principale d'écoulement (H),
    - un papillon (15) disposé pivotant, à l'intérieur du tronçon de canal d'écoulement (3), autour d'un axe de pivotement (S) s'étendant sensiblement perpendiculairement à la direction principale d'écoulement (H), et
    - au moins trois positions de prise de pression (5a à c), une première desdites au moins trois positions de prise de pression (5a à c) étant située en amont d'une deuxième (5b) desdites au moins trois positions de prise de pression et la deuxième position de prise de pression (5b) étant située en amont d'une troisième (5c) desdites au moins trois positions de prise de pression (5a à c),

**caractérisé en ce que**
le tronçon de canal d'écoulement (3) comprend un tronçon de rétrécissement (A) ayant une section d'écoulement réduite et un tronçon d'élargissement (C), la deuxième position de prise de pression (5b) étant située dans le tronçon de rétrécissement (A) et l'axe de pivotement (S) du papillon (15) étant disposé, dans la direction principale d'écoulement (H), entre la deuxième position de prise de pression (5b) et la troisième position de prise de pression (5c), une partie (17) du papillon (15) en amont étant en contact par un bord extérieur (19), de façon au moins partiellement étanche, dans une plage d'angles d'ouverture déterminée, avec une paroi intérieure (11) du tronçon d'élargissement (C).

2. Régulateur de débit volumique (1) selon la revendication 1, comprenant en outre un premier capteur de pression (25a) pour capter une première différence de pression ($\Delta$p1) entre la première position de prise de pression (5a) et la deuxième position de prise de pression (5b), et un deuxième capteur de pression (25b) pour capter une deuxième différence de pression ($\Delta$p2) entre la première position de prise de pression (5a) et la troisième position de prise de pression (5c).

3. Régulateur de débit volumique (1) selon la revendication 2, comprenant en outre une vanne (29) ou un troisième capteur de pression (25c) pour capter la pression ($\Delta$p3) à la troisième position de prise de pression (5c) par rapport à la pression environnante.

4. Régulateur de débit volumique (1) selon l'une des revendications précédentes, l'axe de pivotement (S) du papillon (15) étant disposé dans le tronçon de rétrécissement (A) ou à l'extrémité aval (13) du tronçon de rétrécissement (A) ou en aval du tronçon de rétrécissement (A).

5. Régulateur de débit volumique (1) selon l'une des revendications précédentes, le tronçon de rétrécissement (A) comprenant un tronçon de rétrécissement (B) ayant une paroi intérieure (9) avec, au moins partiellement en coupe longitudinale, une forme convexe, et le tronçon d'élargissement (C) étant disposé en aval du tronçon de rétrécissement (B) et comprenant une paroi intérieure (11) ayant, au moins partiellement en coupe longitudinale, une forme concave.

6. Régulateur de débit volumique (1) selon la revendication 5, la paroi intérieure (11) du tronçon d'élargissement (C) s'étendant, en coupe longitudinale, le long d'un arc de cercle dont le centre est situé sensiblement sur l'axe de pivotement (S).

7. Régulateur de débit volumique (1) selon la revendication 6, la longueur d'arc de l'arc de cercle étant 1/18ième à 1/6ième d'une circonférence de cercle.

8. Régulateur de débit volumique (1) selon l'une des revendications 6 ou 7, une partie d'un bord extérieur radial (19) du papillon (15) s'étendant, dans une zone de pivotement, le long d'un arc de cercle sur la paroi intérieure (11) du tronçon d'élargissement (C).

9. Régulateur de débit volumique (1) selon l'une des revendications précédentes, la plage d'angles d'ouverture déterminée allant de 0° à au moins 15°.

10. Régulateur de débit volumique (1) selon l'une des revendications précédentes, comprenant en outre un dispositif de commande (27) pour commander un moteur destiné au réglage d'un angle d'ouverture ($\theta$) du papillon (15) sur la base d'une capture d'une première différence de prise de pression ($\Delta$p1) entre la première position de prise de pression (5a) et la deuxième position de prise de pression (5b), ainsi que pour capter une deuxième différence de pression ($\Delta$p2) entre la première position de prise de pression (5a) et la troisième position de prise de pression (5c).

11. Procédé de réglage d'un débit volumique passant par un tronçon de canal d'écoulement (3) dans un système d'aération et d'extraction d'air, le procédé comprenant les étapes suivantes :

- capture d'une première différence de pression ($\Delta$p1) entre une première position de prise de pression (5a) au tronçon de canal d'écoulement (3) et une deuxième position de prise de pression (5b) au tronçon de canal d'écoulement (3), la première position de prise de pression (5a) étant située en amont de la deuxième position de prise de pression (5b), la section transversale d'écoulement (3) du canal d'écoulement (3) étant rétrécie à la deuxième position de prise de pression (5b) par rapport à la première position de prise de pression (5a) et s'élargissant dans un tronçon d'élargissement (C),

- capture d'une deuxième différence de pression ($\Delta$p2) entre la première position de prise de pression (5a) et une troisième position de prise de pression (5c) au tronçon de canal d'écoulement (3), la troisième position de prise de pression (5c) étant située en aval de la deuxième position de prise de pression (5b), un papillon (15) étant disposé, en direction principale de l'écoulement (H), entre la deuxième position de prise de pression (5b) et la troisième position de prise de pression (5c), et

- réglage d'un angle d'ouverture ($\theta$) du papillon (15) sur la base de la capture de la première différence de pression ($\Delta$p1) et de la deuxième différence de pression ($\Delta$p2), une partie (17) du papillon (15) en amont étant en contact par un bord extérieur (19), de façon au moins partiellement étanche, dans une plage d'angles d'ouverture déterminée, avec une paroi intérieure (11) du tronçon d'élargissement (C).

12. Procédé selon la revendication 11, pour le réglage de faibles angles d'ouverture ($\theta$), la deuxième différence de pression ($\Delta$p2) ayant plus de poids que la première différence de pression ($\Delta$p1), et pour le réglage d'angles d'ouverture ($\theta$) plus importants, la première différence de pression ($\Delta$p1) ayant plus de poids que la deuxième différence de pression ($\Delta$p2).

13. Procédé selon la revendication 12 ou 13, pour le réglage, un facteur de pondération (w) étant appliqué qui dépend de l'angle d'ouverture ($\theta$) actuel et détermine dans quelle mesure la première différence de pression ($\Delta$p1) et/ou la deuxième différence de pression ($\Delta$p2) détermine le réglage.

14. Procédé selon l'une des revendications 11 à 13, comprenant en outre les étapes de :

- capture de la pression ($\Delta$p3) à la troisième position de prise de pression par rapport à la pression environnante,
- commande d'un générateur de débit volumique dans le système d'aération et d'extraction d'air de façon que le débit volumique engendré par le générateur de débit volumique soit réduit lorsque, en fonction de la pression ($\Delta$p3) captée à la troisième position de prise de pression (5c), le papillon (15) peut être ouvert davantage.

15. Procédé selon l'une des revendications 11 à 14, le papillon (15) n'étant ouvert que lorsque la deuxième différence de pression ($\Delta$p2) dépasse une valeur minimale.

Fig. 1

A
B          C

5a                                          5c
3                    R₁
                        5b
9              17      11
                                            6c
        19    θ        R₂

                    S              15         L
6a          6b
                                    7b
                    23      21
7a                                          7c

Fig. 2

                                        19
        9

5a
        17

        21              S

    15              7a

1

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19545948 C2
- DE 102012011943 A1